**Europäisches Patentamt**

**European Patent Office**

**Office européen des brevets**

(19)

(11) Veröffentlichungsnummer: **0 303 113**
**B1**

(12) **EUROPÄISCHE PATENTSCHRIFT**

(45) Veröffentlichungstag der Patentschrift: **23.01.91**

(51) Int. Cl.⁵: **F 16 H 55/06**

(21) Anmeldenummer: **88112268.3**

(22) Anmeldetag: **28.07.88**

(54) **Verfahren zur Herstellung eines geräuscharm arbeitenden Zahnrades.**

(30) Priorität: **10.08.87 DE 3726583**

(43) Veröffentlichungstag der Anmeldung:
**15.02.89 Patentblatt 89/07**

(45) Bekanntmachung des Hinweises auf die
Patenterteilung:
**23.01.91 Patentblatt 91/04**

(84) Benannte Vertragsstaaten: -
**DE FR**

(56) Entgegenhaltungen:
**DE-C- 940 193**
**FR-A- 358 953**
**FR-A-2 129 004**
**GB-A-1 005 563**
**US-A-4 173 501**

**PATENT ABSTRACTS OF JAPAN, Band 7, Nr.
240, (M-251)1385r, 25. Oktober 1983, Seite 138;
& JP-A-58 128 563 (DAIHATSU KOGYO K.K.)
01-08-1983**
(73) Patentinhaber: **Siemens Aktiengesellschaft
Wittelsbacherplatz 2
D-8000 München 2 (DE)**

(72) Erfinder: **Deynet, Rolf, Dipl.-Ing.
Franz-Stadelmayer-Strasse 9
D-8700 Würzburg (DE)**

Courier Press, Leamington Spa, England.

## Beschreibung

Die Erfindung bezieht sich auf ein Verfahren zur Herstellung eines geräuscharm arbeitenden Zahnrades gemäß Oberbegriff des Patentanspruches 1; ein derartiges Zahnrad ist aus der DE-C-908 933 bekannt.

Im bekannten Fall der DE-C-908 933 ist zur Geräuschminimierung ein Zahnrad in Verbundbauweise aus teilweise metallischem und teilweise nicht metallischem, geräuschdämpfendem Werkstoff derart aufgebaut, daß die Nabe und ein Zahnkranzteil aus Stahl bestehen und diese beiden Bauteile durch eine Kunstharz-Preßstoffmasse miteinander verbunden sind. Zur weiteren Erhöhung der mechanischen Belastbarkeit ist in den Preßstoffteil eine Metallscheibe derart eingepreßt, daß der Zahnkranz von nebeneinanderliegenden, durch den Preßvorgang innig miteinander verbundenen Scheiben aus beiden Verbundwerkstoffen gebildet wird. Die Metallscheibe soll dabei den größten Teil des Drehmomentes und die beiderseitigen außenliegenden Preßstoffscheiben sollen das restliche Moment übernehmen sowie gleichzeitig zur Dämpfung des Geräusches der Zähne der Metallscheibe dienen.

Aufgabe der vorliegenden Erfindung ist es, mit einfacheren fertigungstechnischen Mitteln ein Zahnrad herstellen zu können, das sich einerseits betriebsmäßig durch eine hohe Geräuscharmut auszeichnet und andererseits auch bei Übertragung größerer Drehmomente in allen Betriebszuständen, insbesondere beim Anfahren und Abbremsen, bei langen Betriebsstandzeiten und hohen Betriebstemperaturen die geforderte mechanische Festigkeit gewährleisten kann.

Die Lösung dieser Aufgabe gelingt bei einem Verfahren der eingangs genannten Art durch die Lehre des Patentanspruchs 1; vorteilhafte Ausgestaltungen des erfindungsgemäßen Verfahrens sind jeweils Gegenstand der Unteransprüche.

Durch das erfindungsgemäße Verfahren ist es möglich, ohne in getrennten Verfahren vorgefertigte und vormontierte sowie gesondert zu vergießende Metallteile durch fertigungstechnisch einfaches Spritzgießen einerseits auch bei hohen Temperaturen, starken mechanischen Anfahrbzw. Bremsbelastungen und großen Dauerstandzeiten eine sichere Übertragung des Drehmomentes zwischen Zahnrad und Abtriebswelle gewährleisten und andererseits mit dem eigentlichen, aus mechanisch weicherem, jedoch dafür in hohem Maße geräuschdämpfenden Material des eigentlichen Zahnkranzteiles den Anforderungen nach hoher Geräuscharmut genügen zu können.

Zur zusätzlichen Erhöhung der Drehmomentenübertragbarkeit zwischen Getriebewelle einerseits und Nabenteil andererseits bzw. Nabenteil und aufgespritztem Zahnkranzteil andererseits sind die Getriebewelle an ihrem äußern Umfang mit einer Riffelung bzw. der Nabenteil an seinem äußeren Umfang mit einer Zahnung versehen.

Bei der spritzgußtechnischen erfindungsgemäßen Herstellung des Zahnrades wird zweckmäßigerweise zunächst in einem ersten Spritzgießvorgang der radial innere Nabenteil auf die Getriebewelle aufgespritzt und nach dessen Erhärtung in einem zweiten Spritzgießvorgang der radial äußere Zahnkranzteil auf den Umfang des Nabenteiles aufgespritzt.

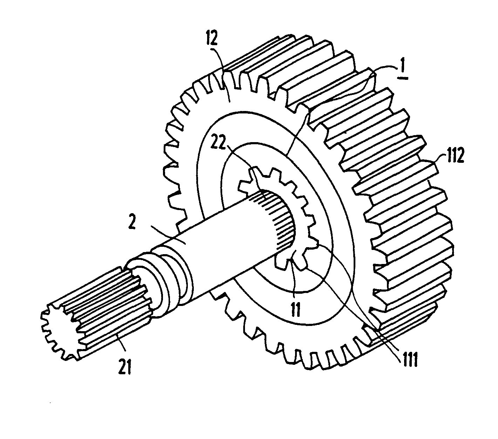

Die Erfindung sowie weitere vorteilhafte Ausgestaltungen werden im folgenden anhand eines schematisch dargestellten Ausführungsbeispieles in der Zeichnung näher erläutert:

Die Zeichnung zeigt eine Getriebewelle 2, an deren vorderem Ende ein Abtriebsritzel 21 vorgesehen und auf deren hinterem Ende ein Zahnrad 1 befestigt ist. In die Zahnung 112 des hier gezeigten Schnecken-Zahnrades greift zum Beispiel die Schneckenwelle eines Elektromotors eines Kfz-Sitzverstellantriebes ein, durch den über das Abtriebsritzel 21 zum Beispiel die Rückenlehnenneigung eines Kfz-Sitzes motorisch verstellbar ist.

Zur betriebsmäßigen Geräuscharmut des Zahnrades 1 einerseits und zur hohen mechanischen Festigkeit der Drehmomentenübernahme zwischen dem Zahnrad 1 und der Getriebewelle 2 andererseits ist erfindungsgemäß auf die Getriebewelle 2 zunächst ein innerer Nabenteil 11 aus einem Thermoplast hoher mechanischer Festigkeit, jedoch dafür geringerer Dämpfungseigenschaft aufgespritzt und anschließend auf den Umfang des Nabenteiles 11 der eigentliche Zahnradteil mit dem Zahnkranzteil 12 aus einem Thermoplast mit einem hohen Dämpfungsfaktor, jedoch dafür geringerer mechanischer Festigkeit aufgespritzt.

Zur Erhöhung der Drehmomentübertragbarkeit zwischen der Getriebewelle 2 einerseits und dem Nabenteil 11 andererseits sowie den beiden Verbundteilen des inneren Nabenteils 11 einerseits und des darauf aufgespritzten Zahnkranzteiles 12 andererseits ist die Getriebewelle 2 im Bereich des Nabenteiles 11 mit einer Riffelung 22 und der Nabenteil 11 an seinem äußeren Umfang mit einer Zahnung 111 im Sinne einer jeweils zusätzlichen formschlüssigen Verbindung versehen.

Nach einer Ausgestaltung der Erfindung sind der radial innere Nabenteil aus einem Polyamid-Thermoplast und der radial äußere Zahnkranzteil aus einem Polyacetat-Thermoplast gebildet.

Zusammenfassend ist also festzustellen, daß zur Geräuschminderung eines auch bei Übertragung hoher Drehmomente die geforderte mechanische Festigkeit gewährleistenden Zahnrades 1, insbesondere des motorseitigen Zahnrades auf der Getriebewelle 2 eines Getriebemotors, zunächst auf die Getriebewelle 2 ein Nabenteil 11 aus einem Thermoplast hoher mechanischer Festigkeit, jedoch dafür schlechter Dämpfungseigenschaften und anschließend auf den äußeren, vorteilhafterweise mit einer Zahnung 111 versehenen Umfang des Nabenteils 11 der eigentliche Zahnkranzteil 12 des Zahnrades 1 spritzgegossen wird.

## Patentansprüche

1. Verfahren zur Herstellung eines geräuscharm arbeitenden Zahnrades (1) in Verbundbauweise, insbesondere eines auf einer Getriebewelle eines Getriebemotors befestigten Schneckenrades, dadurch gekennzeichnet, daß ein erster wellenseitiger radial innerer Nabenteil (11) aus einem Thermoplast hoher mechanischer Festigkeit, jedoch mit geringem Dämpfungsfaktor und auf den Umfang des Nabenteils (11) ein radial äußerer Zahnkranzteil (12) aus einem Thermoplast mit hohem Dämpfungsfaktor, jedoch geringer mechanischer Festigkeit gespritzt wird.

2. Verfahren nach Anspruch 1, dadurch gekennzeichnet, daß der Nabenteil (11) auf seinem radial äußeren, für den aufzuspritzenden Zahnkranzteil (12) vorgesehenen Umfang mit einer Zahnung (111) versehen wird.

3. Verfahren nach Anspruch 1 und/oder 2, dadurch gekennzeichnet, daß der Nabenteil (11) auf eine Getriebewelle (2) aufgespritzt wird.

4. Verfahren nach einem der Ansprüche 1 bis 3, dadurch gekennzeichnet, daß die Getriebewelle (2) zumindest im Bereich des aufzuspritzenden Nabenteils (11) mit einer Riffelung (22) versehen wird.

5. Verfahren nach einem der Ansprüche 1 bis 4, dadurch gekennzeichnet, daß der wellenseitige Nabenteil (11) und der radial äußere Zahnkranzteil (12) nach dem Spritzgußverfahren in zwei aufeinanderfolgenden Arbeitsgängen hergestellt werden.

6. Verfahren nach einem der Ansprüche 1 bis 5, dadurch gekennzeichnet, daß der radial innere Nabenteil (11) aus einem Polyamid-Thermoplast und der radial äußere Zahnkranzteil (12) aus einem Polyacetat-Thermoplast hergestellt werden.

**Revendications**

1. Procédé pour fabriquer une roue dentée (1) de type composite, fonctionnant avec un faible bruit, notamment une roue tangente fixée sur un arbre de transmission d'un moto-réducteur, caractérisé par le fait qu'on forme par moulage par injection un premier élément de moyeu (11), disposé radialement vers l'intérieur du côté de l'arbre, avec une matiere thermoplastique possédant une résistance mécanique élevée, mais un faible degré d'atténuation, et on forme par moulage par injection, sur le pourtour de l'élément de moyeu (11), une partie formant couronne dentée (12), extérieure du point de vue radial, en une matière thermoplastique possédant un degré élevé d'atténuation, mais une faible résistance mécanique.

2. Procédé suivant la revendication 1, caractérisé par le fait qu'on forme sur l'élément de moyeu (11) une denture (111) sur son pourtour radialement extérieur et qui est prévu pour la partie formant couronne dentée (12) devant être moulée par injection.

3. Procédé selon la revendication 1 et/ou 2, caractérisé par le fait qu'on forme par moulage par injection l'élément de moyeu (11) sur un arbre de transmission (2).

4. Procédé suivant l'une des revendications 1 à 3, caractérisé par le fait qu'on forme des nervures (22) sur l'arbre de transmission (2), au moins dans la zone de l'élément de moyeu (11) devant étre réalisé par moulage par injection.

5. Procédé suivant l'une des revendications 1 à 4, caractérisé par le fait qu'on fabrique selon le procédé de moulage par injection l'élément de moulage (11) situé du côté de l'arbre et la partie formant couronne dentée (12), radialement extérieure, en deux étapes opératoires successives.

6. Procédé suivant l'une des revendications 1 à 5, caractérisé par le fait qu'on fabrique l'élément de moyeu (11), radialement intérieur, en une matière thermoplastique à base de polyamide et qu'on fabrique la partie formant couronne dentée (12), radialement extérieure, en une matière thermoplastique à base de polyacétate.

**Claims**

1. Method for producing a toothed wheel (1), which operates at a low-noise level, in composite construction, more particularly a worm wheel secured to a gear shaft of a geared motor, characterised in that a first shaft-side, radially internal hub portion (11) is injection-moulded out of a thermoplastic of high mechanical strength, yet with low attenuation factor, and on the periphery of the hub portion (11) a radially external toothed ring portion (12) is injection-moulded out of a thermoplastic with high attenuation factor, yet low mechanical strength.

2. Method according to claim 1, characterised in that the hub portion (11) is provided with a toothing (111) on its radially external periphery which is provided for the toothed ring portion (12) to be injection-moulded thereon.

3. Method according to claim 1 and/or 2, characterised in that the hub portion (11) is injection-moulded onto a gear shaft (2).

4. Method according to one of the claims 1 to 3, characterised in that the gear shaft (2) is provided with a ribbing (22) at least in the region of the hub portion (11) which is to be injection-moulded thereon.

5. Method according to one of the claims 1 to 4, characterised in that the shaft-side hub portion (11) and the radially external toothed ring portion (12) are produced according to the injection-moulding method in two successive operations.

6. Method according to one of the claims 1 to 5, characterised in that the radially internal hub portion (11) is produced of a polyamide-thermoplastic and the radially external toothed ring portion (12) is produced of a polyacetate-thermoplastic.